Europäisches Patentamt

European Patent Office

Office européen des brevets

(11) Publication number: **0 152 493**
**B1**

## EUROPEAN PATENT SPECIFICATION

(45) Date of publication of patent specification: **27.07.88**

(51) Int. Cl.⁴: **G 02 B 6/04, F 21 S 5/00**

(21) Application number: **84101066.3**

(22) Date of filing: **02.02.84**

(54) **Photoradiator.**

(43) Date of publication of application:
**28.08.85 Bulletin 85/35**

(45) Publication of the grant of the patent:
**27.07.88 Bulletin 88/30**

(84) Designated Contracting States:
**CH DE FR GB IT LI SE**

(56) References cited:
**EP-A-0 069 977**
**EP-A-0 093 998**
**FR-A-2 220 144**

**PATENTS ABSTRACTS OF JAPAN, vol. 7, no.
78(P-188) (1223), 31st March 1983**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to a elongate photoradiator in accordance with the generic clause of claim 1. The photoradiator is usable, for example, as a light source for photosynthetic reactions.

To meet the increasing demand for energy saving today, effective use of solar energy has been studied in various fields actively. For the most effective use of solar energy, it is the primary requisite that the solar energy be used as optical energy without being transformed into another kind of energy such as thermal energy or electrical energy. In light of this, the applicant has proposed in various forms a lighting system in which the sunlight converged by lenses or the like is introduced into light conducting cables to propagate therethrough to desired locations.

Light advancing through a light conducting cable has directivity. Hence, concerning the application of the solar energy to lighting as stated above, the angular range available for the radiation of light is usually not larger than about 46 degrees when the light is discharged from a simply cut end of the light conducting cable. Such a narrow radiation range is incapable of lighting a room or the like in an even luminous intensity distribution. The applicant has made various propositions (e.g. EP—A—0069977) concerned with a photoradiator which effectively diffuses light introduced thereinto from a light conducting cable over substantial range and in an even luminous intensity distribution.

Meanwhile, fish farming or like industry requires zooplunkton in order to feed small fish or the like. Zooplunkton, in turn, propagates with chlorella employed as a feed. What is necessary for effective cultivation of chlorella is the adequate supply of optical energy and carbon dioxide, as well known in the art. A dillematic situation encountered with chlorella cultivation is that as chlorella propagates to a substantial density, it prevents light from reaching distant places with its own shadow and, thereby, fails to be evenly supplied with optical energy. The lighting systems and photoradiators proposed by the applicant are a solution to such a situation.

From the above-mentioned EP—A—0 069 977, a photoradiator in accordance with the generic clause of claim 1 is known. The photoradiator comprises a cylindrical light conducting element, a coaxial casing made of light transmitting material, and a plurality of transparent members, arranged in the annular space between the central member and the casing, said transparent members consisting of fine-grain adhesive elements secured to the outer periphery of the central member, whereby the light propagating through the photoradiator is discharged radially outwardly from the photoradiator through said transparent members and the casing.

In EP—A—0 093 998, a similar photoradiator of the present applicant is known. That photoradiator comprising a cylindrical conducting member, a coaxial transparent casing and a plurality of transparent members arranged in the annular space therebetween, constituted by the different turns of a helical strip of light diffusing material secured to the member.

From FR—A—2 220 144, a photoradiator is known comprising a light conducting member and transparent rings which coaxially surround the light conducting member and are arranged parallel to each other along a length of the light conducting member.

It is the object of the present invention to provide a simple photoradiator which allows light propagating through a light conducting cable to be effectively radiated by diffusion in an even intensity distribution.

This object is solved with a photoradiator having the features of claim 1.

Preferred embodiments are disclosed in the depending claims.

The features of the present invention will become more apparent from the following detailed description taken with the accompanying drawings.

Figs. 1 to 3 are views of prior art photoradiators which the applicant has proposed.

Figs. 4A and 4B are views of a photoradiator embodying the present invention.

Figs. 5A and 5B are views of a background art embodiment.

Figs. 6A and 6B are views of another embodiment of the present invention also corresponding to Figs. 4A and 4B respectively;

Figs. 7A—7D are views of another embodiment of the present invention;

Figs. 8A and 8B are views of a modification to a sheath included in the embodiment of Figs. 7A—7D.

While the photoradiator of the present invention is susceptible of numerous physical embodiments, depending upon the environment and requirements of use, substantial numbers of the herein shown and described embodiments have been made, tested and used, and all have performed in an eminently satisfactory manner.

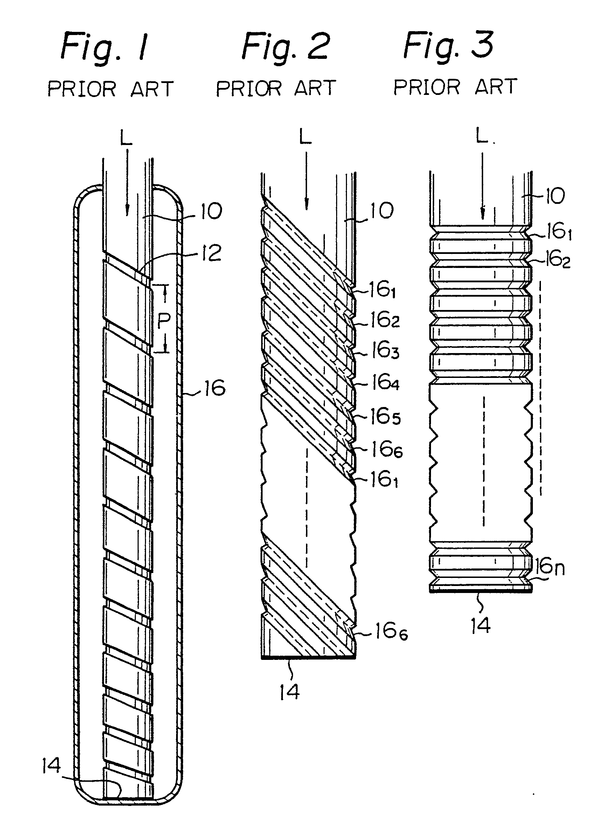

To facilitate understanding of the present invention, some prior art photoradiators which the applicant has proposed will be described with reference to Figs. 1—3.

In Fig. 1, the photoradiator comprises a light conducting member 10 which has a spiral recess or groove 12 formed in the periphery thereof. Light L introduced into the light conducting member 10 propagates therethrough to be effectively radiated to the ambience reflected by the walls of the spiral groove 12. The radiated light may be used for lighting purpose by way of example.

The pitch P of the spiral groove 12 may be sequentially reduced along the direction of light propagation through the light conductor 10 in order to discharge the light substantially in an even intensity distribution over the entire length of the light conductor 10. A reflector 14 may be mounted on the light outlet end of the light conductor 10 so as to steer radially outwardly even the light returned by the reflector 14 into the light conductor 10.

A transparent or semitransparent casing or sheath 16 may be employed to hermetically encapsulate the light conductor 10. The sheath 16 will keep the light conductor 10 from contamination or damage while preventing one from being hurt by the sharp edges of the spiral groove 12. Especially, where the photoradiator is used under water as a light source for the cultivation of chlorella, for example, the sheath 16 will allow no fur to gather on the surface of the light conductor 10 thereby maintaining it clean all the time. Another advantage attainable with the sheath 16 is that the air layer between the light conductor 10 and the sheath 16 allows the light to be scattered into the water over a desired range and in a desired direction. Should the sheath 16 be absent, the light would be radiated in quite a limited range from the end portion of the light conductor 10.

The photoradiators shown in Figs. 2 and 3 are essentially similar in function to the photoradiator described above with reference to Fig. 1. In these drawing, structural elements common or similar to those of Fig. 1 are designated by the same reference numerals. In Fig. 2, the cylindrical light conductor 10 is formed with a plurality of spiral grooves in the peripheral surface thereof, grooves $16_1$—$16_6$ in the illustrated example. In Fig. 3, the cylindrical light conductor 10 is formed with a plurality of annular grooves $16_1$—$16_n$ at spaced locations along the length thereof. The sheath 16 shown in Fig. 1 may be employed with the photoradiator of Fig. 2 or 3, if desired. Again, the pitch of the spiral grooves $16_1$—$16_n$ or the depth of the annular grooves $16_1$—$16_n$ may be sequentially increased along the length of the light conductor 10 in order to set up an even distribution of light.

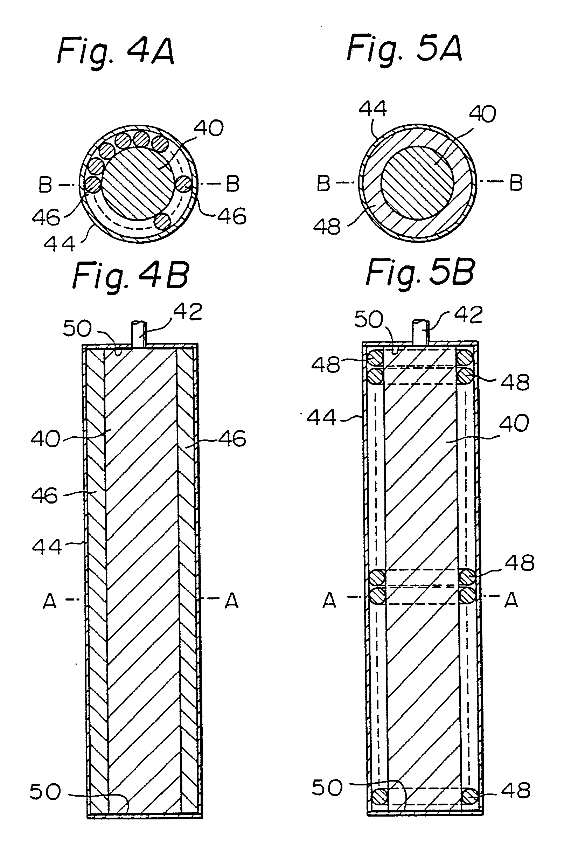

Referring to Figs. 4A and 4B, a photoradiator embodying the present invention is shown and includes a cylindrical light conducting member 40. A light conducting cable 42 extending from a light source (not shown) is connected to one end of the light conductor 40. A transparent or semitransparent casing or sheath 44 coaxially and hermetically surrounds the light conductor 40 in such a manner as to define an annular spacing therebetween. Arranged in this annular space are a plurality of transparent elongate members, or rods, 46 which are parallel to the light conductor 40 and engaged with the outer periphery of light conductor 40 and the inner periphery of the sheath 44. Although not shown for the simplicity of illustration, the light conductor 40 is formed with a recess or recesses as described in conjunction with the prior art photoradiators.

In the construction shown in Figs. 4A and 4B, light introduced from the cable 42 into the light conductor 40 emanates therefrom in the previously described manner and then directed to the outside through the transparent rods 46. It will be understood that the light appears in vertical lines which correspond in number to the transparent rods 46.

Referring to Figs. 5A and 5B, a background art embodiment is shown. In these drawings, the same structural elements as those shown in Figs. 4A and 4B are designated by like reference numerals. As shown, the photoradiator comprises a plurality of annular transparent members, or rings, 48 which are stacked one upon another in the annular spacing between the light conductor 40 and the sheath 44. Each of the transparent rings 48 is engaged with the outer periphery of the light conductor 40 and the inner periphery of the sheath 44. In this construction, light will be emitted as horizontal lines which are identical in number with the transparent rings 48.

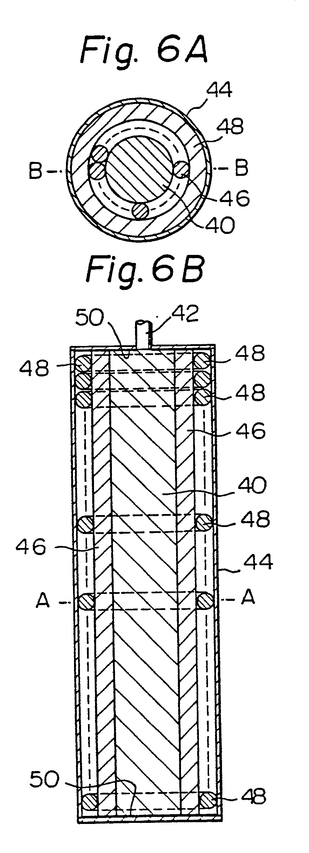

The photoradiator construction of Figs. 4A and 4B and that of Figs. 5A and 5B may be combined as illustrated in Figs. 6A and 6B. In Figs. 6A and 6B, structural elements common or similar to those of Figs. 4A and 4B and 5A and 5B are designated by like reference numerals. The transparent rods 46 are arranged around and in contact with the light conductor 40, and the transparent rings 48 around the rods 46 in contact with the rods 46 and sheath 44. In this combined photoradiator configuration, light will emanate in the form of spots the number of which is equal to the number of the intersecting points of the rods 46 and rings 48.

The grooved configuration of the light conductor 40 shown and described is not essential in accordance with the present invention. Where use is made of a light conductor without a groove and the transparent rods and/or rings are arranged therearound, the spacing between adjacent rings may be sequentially decreased along the direction of light propagation to substantially evenly discharge the light from the respective rings.

In any of the foregoing embodiments, the refractive index may be sequentially increased from the light conductor 40 toward the sheath 44 so as to more effectively steer the light from the light conductor 40 to the outside of the sheath 44. For additionally effective conduction of the light to the outside of the sheath 44, the refractive indexes and diameters of the transparent rods 46 and rings 48 may be selected such that the light incident on the rods 46 or the rings 48 are focused to the inlet/outlets of the rods 46 or rings 48.

While the rods 46 and rings 48 have been shown and described as having circular cross-sections, such is only illustrative and they may be provided with triangular or arcuate cross-sections instead. The mirror 50 at the end of the light conductor 40 is not always necessary; where it is absent, the light propagating through the light conductor 40 will be discharged also from the end of the light conductor 40. It should be noted that to set up an even distribution of light over the entire length of the light conductor 40 under the presence of the mirror 50, the pitch of the grooves or the spacing between the rings has to be calibrated taking into account the component of light which is reflected by the mirror 50 into the light conductor 40.

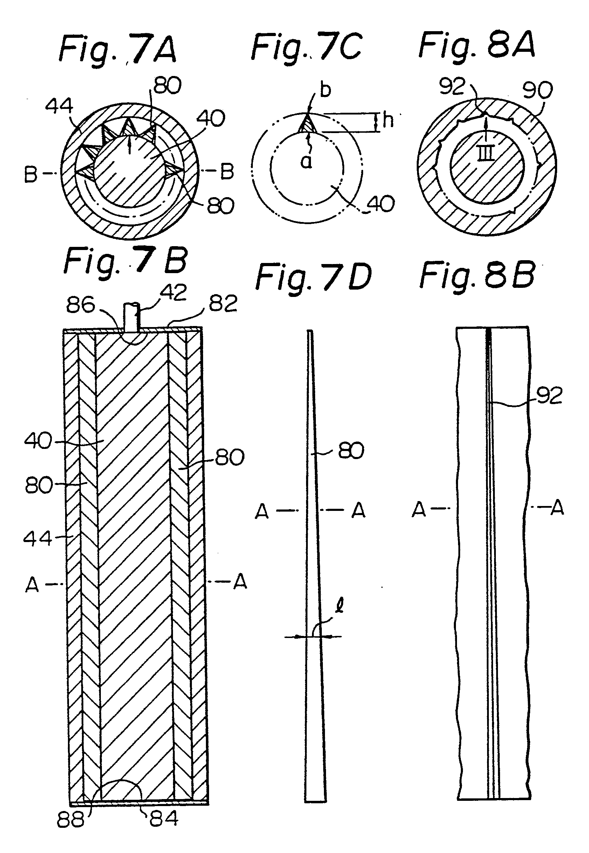

Referring to Figs. 7A—7D, still another embodiment of the present invention is shown, in which the same reference numerals as those shown in Figs. 4A to 6 designate the same structural elements. The light conductor 40 and the transparent or semitransparent sheath 44 define therebetween an annular spacing in which a plurality of transparent elongate members, or bars, 80 are disposed. Each of the bars 80 is positioned parallel to and in contact with the light conductor 40 and provided with a generally triangular cross-section. One side of the triangle is formed arcuate to remain in intimate contact with the outer periphery of the light conductor 40. The top of the sheath 44 is closed by a top plate 82, and the bottom by a bottom plate 84. The top plate 82 carries a mirror 86 therewith and the bottom plate, a mirror 88.

In the photoradiator described above, light introduced from the light conducting cable 42 into the light conductor 40 is routed through the bars 80 radially outwardly to illuminate the ambience.

It will be noted in Figs. 7A—7D that the mirror 88 carried by the bottom plate 84 may be omitted to allow that part of the light which reaches the end of the light conductor 40 to emanate to the outside thereat.

As shown in Fig. 7C, each of the bars 80 has a generally triangular cross-section which includes an arcuate side $a$ engageable with the light conductor 40 and an apex or ridge $b$. The side $a$ has an extension $l$ (Fig. 7D) which progressively increases along the direction of light propagation through the light conductor 40, that is, the bar 80 engages with the light conductor 40 over an area which progressively increases along the direction of light propagation. In other words, although the luminous flux density in the light conductor 40 sequentially decreases along the direction of light propagation, it is compensated for by the sequentially increasing contact area of the bar 80 with the light conductor 40. This allows the light to be discharged in a substantially even intensity distribution from the apex or ridge $b$ of the bar 80.

A modification to the sheath 80 of the photoradiator shown in Figs. 7A—7D is shown in Figs. 8A and 8B. The modified sheath 90 is formed with channels 92 in the inner periphery thereof in order to receive the ridges $b$ of the bars 80. Assuming that the bars 80 have a common height $h$ (Fig. 7C) as measured from their arcuate sides $a$, arranging the bars 80 around the light conductor 40 and then coupling the sheath 90 over the bars 80 will automatically position the bars 80 with accuracy relative to the light conductor 40. Positioned in this manner, the bars 80 may be bonded to the light conductor 40. Thus, the modified sheath configuration shown in Figs. 8A and 8B facilitates positioning of the bars 80.

In summary, it will be seen that the present invention provides a simple photoradiator which is capable of effectively diffusing light in an even intensity distribution from a light conducting cable.

## Claims

1. An elongate photoradiator for radially outwardly radiating light which is introduced into one end thereof to propagate therethrough toward the other end, comprising:

an elongate cylindrical light conducting member (40) defining said one end and said other end of the photoradiator;

a casing (44; 90) disposed coaxially around said light conducting member to define an annular space in co-operation with the light conducting member, said casing being made of a light transmitting material; and

a plurality of transparent members (46; 46, 48; 80) arranged in said annular space to engage the outer surface of the light conducting member; characterized in that said plurality of transparent members (46; 46, 48; 80) are furthermore arranged to engage also the inner surface of the casing, and in that said transparent members comprise transparent elongate rods or bars (46; 80) each of which extends parallel to the longitudinal axis of the light conducting member (40).

2. A photoradiator as claimed in claim 1, in which the light conducting member (40) is formed with recesses in the outer surface thereof.

3. A photoradiator as claimed in claim 1, in which said transparent members (46, 48) further comprise a plurality of transparent rings (48) each surrounding said transparent rods (46) and each engaging the rods with its inner periphery, the casing engaging the outer periphery of each of the rings with its inner surface.

4. A photoradiator as claimed in claim 3, in which the rings (48) are spaced from each other by distances which sequentially decrease along the direction of light propagation through the light conducting member.

5. A photoradiator as claimed in claim 1, in which said transparent members comprise transparent elongate bars (80) each having a substantially triangular cross-section, one side (a) of said triangular cross-section being formed arcuate and engaged with the outer surface of the light conducting member, said arcuate side (a) having an extension (l) which sequentially increases along the direction of light propagation through the light conducting member.

6. A photoradiator as claimed in claim 5, in which the casing (90) is formed with channels (92) in the inner surface thereof for receiving ridges (b) of the bars (80).

7. A photoradiator as claimed in claim 1, further comprising a mirror (50) located at said other end of the light conducting member.

## Patentansprüche

1. Längliche Leuchte, die radial nach außen Licht abstrahlt, das an einem Ende der Leuchte eingekoppelt wird, um durch die Leuchte hindurch zum anderen Ende zu wandern,

mit einem länglichen, zylindrischen, lichtleitenden Element (40), das das eine und das andere Ende der Leuchte bildet;

mit einem Gehäuse (44), das koaxial um das lichtleitende Element herum angeordnet ist, um einen Ringraum mit dem lichtleitenden Element zu bilden, wobei das Gehäuse aus einem lichtdurchlässigen Material hergestellt ist und mit mehreren transparenten Elementen (46), die in dem Ringraum angeordnet sind und mit der Außenfläche des lichtleitenden Elements in Berührung sind, dadurch gekennzeichnet, daß die mehreren transparenten Elemente (46) auch mit der Innenfläche des Gehäuses in Berührung sind und daß das transparente Element transparente längliche Stangen oder Arme (46) umfaßt, die sich jeweils parallel zur Längsachse des lichtleitenden Elements (40) erstrecken.

2. Leuchte nach Anspruch 1, wobei das lichtleitende Element (40) mit Einkerbungen in seiner Außenfläche versehen ist.

3. Leuchte nach Anspruch 1, wobei die durchsichtigen Elemente weiterhin mehrere transparente Ringe (48) aufweisen, die jeweils die transparenten Stangen (46) umgeben und mit den Stangen am Innenumfang in Anlage kommen, und wobei das Gehäuse den Außenumfang jedes Rings mit seiner Innenfläche berührt.

4. Leuchte nach Anspruch 3, wobei die Ringe voneinander um Abstände beabstandet sind, die sich in Richtung der Lichtfortpflanzung durch das lichtleitende Element nach und nach verkleinern.

5. Leuchte nach Anspruch 1, wobei die transparenten Elemente transparente längliche Arme (80) aufweisen, und wobei jeder Arm einen im wesentlichen dreieckförmigen Querschnitt hat, wobei eine Seite des dreieckförmigen Querschnitts gebogen ausgebildet ist und mit der Außenfläche des lichtleitenden Elements in Eingriff steht und wobei die gebogene seite eine Verlängerung hat, die sich in Richtung der Lichtfortpflanzung durch das lichtleitende Element nach und nach vergrößert.

6. Leuchte nach Anspruch 5, wobei das Gehäuse (90) Kanäle (92) an der Innenfläche zur Aufnahme von Kanten der Arme aufweist.

7. Leuchte nach Anspruch 1, wobei weiterhin ein Spiegel (50) an dem anderen Ende des lichtleitenden Elements angeordnet ist.

**Revendications**

1. Un photoradiateur allongé pour rayonner radialement vers l'extérieur de la lumière qui est introduite dans une de ses extrémités de façon qu'elle se propage dans celui-ci en direction de son autre extémité, comprenant:
un élément cylindrique allongé de conduction de lumière (40) définissant ladite extrémité citée en premier et ladite autre extrémité du photoradiateur;
un carter (44; 90) disposé coaxialement autour dudit élément conducteur de lumière de façon à définir un intervalle annulaire en coopération avec l'élément conducteur de lumière, ledit carter étant formé d'une matière transmettant la lumière; et
une pluralité d'éléments transparente (46; 46, 48; 80) disposés dans ledit intervalle annulaire de manière à entrer en contact avec la surface extérieure de l'élément conducteur de lumière; caractérisé en ce que les éléments transparents (46; 46, 48; 80) de ladite pluralité sont en outre disposés de manière à entrer en contact également avec la surface intérieure du carter, et en ce que lesdits éléments transparents comprennent des tiges ou barrers allongées transparentes (46; 80) qui sont chacune orientées parallèlement à l'axe longitudinal de l'élément conducteur de lumière (40).

2. Un photoradiateur tel que revendiqué dans la revendication 1, dans lequel l'élément conducteur de lumière (40) est pourvu d'évidements dans sa surface extérieure.

3. Un photoradiateur tel que revendiqué dans la revendication 1, dans lequel lesdits éléments transparents (46, 48) comprennent en outre une pluralité d'anneaux transparents (48) entourant chacun lesdites tiges transparentes (46) et entrant chacun en contact avec les tiges par leur périphérie intérieure, le carter entrant en contact avec la périphérie extérieure de chacun des anneaux par sa périphérie intérieure.

4. Un photoradiateur tel que revendiqué dans la revendication 3, dans lequel les anneaux (48) sont espacés l'un de l'autre de distances qui diminuent séquentiellement dans la direction de propagation de la lumière dans l'élément conducteur de lumière.

5. Un photoradiateur tel que revendiqué dans la revendication 1, dans lequel lesdits éléments transparents comprennent des barres allongées transparentes (80) ayant chacune une section droite sensiblement triangulaire, un côte (a) de ladite section droite triangulaire étant pourvu d'un profil incurvé et entrant en contact avec la surface extérieure de l'élément conducteur de lumière, ledit côté incurvé (a) ayant une dimension (l) qui augmente séquentiellement dans la direction de propagation de la lumière dans l'élément conducteur de lumière.

6. Un photoradiateur tel que revendiqué dans la revendication 5, dans lequel le carter (90) est pourvu de canaux (92) dans sa surface intérieure pour recevoir des nervures (b) des barres (80).

7. Un photoradiateur tel que revendiqué dans la revendication 1, comprenant en outre un miroir (50) placé à ladite autre extrémité de l'élément conducteur de lumière.

Fig. 1
PRIOR ART

Fig. 2
PRIOR ART

Fig. 3
PRIOR ART

*Fig. 4A*

*Fig. 5A*

*Fig. 4B*

*Fig. 5B*

# Fig. 6A

# Fig. 6 B

# Fig. 7A

# Fig. 7C

# Fig. 8A

# Fig. 7 B

# Fig. 7D

# Fig. 8B